# EUROPEAN PATENT SPECIFICATION

(11) **EP 4 510 532 B1**
(45) Date of publication and mention of the grant of the patent: **13.08.2025**
(21) Application number: 23809443.7
(22) Date of filing: 11.07.2023
(51) Int. Cl.: H04L 61/5038, H02J 3/38, H02J 7/00, H02J 13/00

(54) **DEVICE AND METHOD FOR IDENTIFYING PHYSICAL LOCATION OF BATTERY PACK, AND METHOD FOR ADDRESSING DURING PHOTOVOLTAIC POWER STATION START-UP**
VORRICHTUNG UND VERFAHREN ZUR IDENTIFIZIERUNG DER PHYSISCHEN POSITION EINES BATTERIEPACKS UND VERFAHREN ZUR ADRESSIERUNG WÄHREND DES HOCHFAHRENS EINES FOTOVOLTAISCHEN KRAFTWERKS
DISPOSITIF ET PROCÉDÉ D'IDENTIFICATION D'EMPLACEMENT PHYSIQUE DE BLOC-BATTERIE, ET PROCÉDÉ D'ADRESSAGE PENDANT LE DÉMARRAGE D'UNE CENTRALE PHOTOVOLTAÏQUE

(30) Priority: 15.06.2023 CN 202310709628
(43) Date of publication of application: 19.02.2025
(73) Proprietor: Shanghai Sigeyuan Intelligent Technology Co., Ltd, Shanghai 200120 (CN)
(72) Inventor: KANG, Changquan, Pudong New Area Shanghai 200120 (CN); CHEN, Cheng, Pudong New Area Shanghai 200120 (CN); LIU, Xinwei, Minhang District Shanghai 201100 (CN)
(74) Representative: Bayramoglu et al.
(86) International application number: PCT/CN2023/106681
(87) International publication number: WO 2024/254929

(56) References cited:
- EP-A1- 4 096 046
- CN-A- 113 542 440
- CN-A- 115 065 132
- CN-A- 115 085 342
- CN-A- 115 085 342
- KR-A- 20160 139 990
- KR-B1- 102 148 060
- US-A1- 2022 393 475

## Description

### TECHNICAL FIELD

The present disclosure relates to the technical field of photovoltaic control, particularly to the technical field of photovoltaic power plant management, and specifically to an apparatus and method for identifying a physical location of a battery pack, and a photovoltaic power plant commissioning addressing method.

### BACKGROUND

A photovoltaic power plant is a photovoltaic power generation system utilizing solar energy and including solar panels made of special materials such as crystalline silicon panels, inverters, and other electronic components. Photovoltaic power plants are connected to the power grid to achieve bi-directional transmission of electricity with the power grid. Photovoltaic power plants are the most encouraged green energy projects for development. During operation, solar panels generate direct current and then the direct current is converted into alternating current and applied to the domestic or commercial power supply system. If the power generated by the photovoltaic system exceeds the load demand, the photovoltaic system stores the excess electricity in the energy storage device. Conversely, if sunlight is insufficient or the load demand exceeds the photovoltaic system's power generation, the energy storage device supplies power to keep the load running normally.

The energy storage device may generally include at least one battery pack. In order to facilitate the management and maintenance of each battery pack, the physical location of each battery pack in the energy storage device of the photovoltaic power plant needs to be quickly determined. The main method currently used is to install a dip switch connected to an internal controller at the location of each battery pack. The physical location is set for each controller by using binary code and adjusting the number of bits of the dip switch. However, this method requires for respectively setting each battery pack controller, resulting in a high error rate and low setting efficiency. Although there are automatic methods for identifying the physical location of the battery pack, they are complicated and still require manual installation of the terminal matching resistors after the identification of the physical location of the battery pack. As a result, the installation efficiency still needs to be improved. CN115085342A discloses an energy storage system and an inverter and battery pack connection interface identification method. The energy storage system comprises an inverter and a plurality of battery packs used for being connected with the inverter, and the inverter is provided with an inversion control unit and at least two inversion interface units. Each battery pack is provided with a battery control unit and two battery interface units which are connected with each other; the inversion control unit is provided with inversion I/O interfaces with the same number as the inversion interface units, the battery control unit is provided with battery I/O interfaces, and when the battery pack is connected with the inverter, the battery I/O interfaces are sequentially connected with the inversion I/O interfaces; each battery pack generates an identification signal through the battery control unit in sequence and sends the identification signal to the corresponding inversion interface unit; and the inverter determines the inversion I/O interface corresponding to the inversion interface unit receiving the identification signal according to the identification signal so as to determine the connection condition of each battery pack and each inversion interface unit. US2022/393475A1 discloses an energy storage system, a physical position identification method of a battery management system, and a photovoltaic power generation system. The energy storage system includes at least one energy storage container, and the energy storage container includes a battery management system and m battery clusters. Third controllers corresponding to n battery packs in each battery cluster determine a first third controller connected in series, and set a physical position of the first third controller to a first physical position. An ith third controller in the third controllers corresponding to then battery packs in each battery cluster determines a physical position of the ith third controller based on a position signal sent by an (i-1)th third controller, where i=2, 3, . .., or n. A first controller determines physical positions of remaining second controllers according to a rapid spanning tree protocol (RSTP) and a known physical position of a second controller.

### SUMMARY

A main objective of the present disclosure is to overcome at least one of the above-mentioned defects by providing an apparatus for identifying a physical location of a battery pack, which has a simple overall structure and low implementation cost, yet effectively improving the efficiency of physical location identification of the battery pack.

Another main objective of the present disclosure is to overcome at least one of the above-mentioned defects by providing a method for identifying a physical location of a battery pack, which can automatically calibrate the physical location of the battery pack, to improve both the efficiency and reliability of the physical location identification of the battery pack.

Another main objective of the present disclosure is to overcome at least one of the above defects by providing a photovoltaic power plant commissioning addressing method which can achieve automatic calibration of the physical location of the battery pack during photovoltaic power plant commissioning, to improve the identification efficiency, shorten the commissioning time of the photovoltaic power plant, and improve the user experience.

**In** order to achieve the above objectives, the present disclosure adopts the following technical solutions:
The present disclosure provides an apparatus for identifying a physical location of a battery pack, used for a photovoltaic power plant including an energy storage device, where the energy storage device includes a plurality of battery packs, the photovoltaic power plant includes an inverter, and the apparatus for identifying a physical location of a battery pack includes a main controller; and
the plurality of battery packs are electrically connected to the inverter via a power line and the battery packs are connected to the inverter via an address calibration line, the address calibration line is used to transmit a physical location identification signal, and the main controller is communicatively connected to the inverter and the battery packs via a communication bus.

According to one of the embodiments of the present disclosure, the battery packs are sequentially connected in parallel via the power line, and address configuration interfaces of the battery packs are sequentially connected via the address calibration line.

According to one of the embodiments of the present disclosure, the battery packs are sequentially connected in parallel via the power line, a battery controller is provided in each battery pack, and digital interfaces of the battery controllers are sequentially connected via the address calibration line.

According to one of the embodiments of the present disclosure, the inverter is electrically connected to at least one of the plurality of battery packs via the power line, the inverter includes an inverter controller, and a digital interface of the inverter controller is connected via the address calibration line to a digital interface of the battery pack connected to the inverter.

According to one of the embodiments of the present disclosure, the main controller is communicatively connected to the inverter controller and the battery controllers via the communication bus.

According to one of the embodiments of the present disclosure, the battery controller has at least one group of digital interfaces, and digital interfaces of every two adjacent battery controllers are connected via the address calibration line, to sequentially connect the plurality of battery packs.

According to one of the embodiments of the present disclosure, among the plurality of battery packs sequentially connected, a digital input interface of a battery controller in a battery pack located at an end is connected to a digital output interface of the inverter via the address calibration line.

According to one of the embodiments of the present disclosure, each group of digital interfaces includes a digital input interface and a digital output interface, among the plurality of battery packs sequentially connected, a digital input interface of a battery pack is connected to a digital output interface of a previous battery pack via the address calibration line, and a digital output interface of a battery pack is connected to a digital input interface of a latter battery pack via the address calibration line.

According to the embodiments of the present disclosure, each battery pack is internally provided with a terminal matching resistor and an electrically controllable switch, and the terminal matching resistor is connected in series with the electrically controllable switch and then connected in parallel to the communication bus.

According to one of the embodiments of the present disclosure, the battery pack is provided with an electrically controllable start switch, and the main controller is connected to each start switch separately through an auxiliary power control line, to start the battery pack.

According to one of the embodiments of the present disclosure, the main controller is an inverter controller of the inverter, and the inverter controller is communicatively connected to each battery controller via the communication bus.

According to one of the embodiments of the present disclosure, the communication bus is an RS485 bus or a controller area network (CAN) bus.

In particular, the present disclosure further provides a method for identifying a physical location of a battery pack based on the above apparatus for identifying a physical location of a battery pack. The method includes the following steps:
step S1: sending, by a main controller, a device search start instruction to an inverter;
step S2: sending, by the inverter after receiving the device search start instruction, an initial physical location identification signal to an n^{th} battery pack connected to the inverter;
step S3: determining, by the n^{th} battery pack, an initial location based on the initial physical location identification signal sent by the inverter, and sending an intermediate physical location identification signal to an (n+1)^{th} battery pack connected to the n^{th} battery pack; and
step S4: determining, by the (n+1)^{th} battery pack connected to the n^{th} battery pack, a physical location of the (n+1)^{th} battery pack based on the intermediate physical location identification signal, and continuing to send the intermediate physical location identification signal to an (n+2)^{th} battery pack connected to the (n+1)^{th} battery pack, to determine a physical location of the (n+2)^{th} battery pack, where n is an integer greater than or equal to 1.

According to the embodiments of the present disclosure, the method further includes step S5: after physical locations of all the battery packs are identified, sending, by the main controller, a terminal resistor turn-on trigger signal via a communication bus to a battery pack that last confirms the physical location, turning on, by the battery pack that last confirms the physical location, an electrically controllable switch in the battery pack upon receiving the terminal resistor turn-on trigger signal, and connecting the communication bus to a terminal matching resistor at a tail end.

According to one of the embodiments of the present disclosure, a terminal matching resistor at a head end of the communication bus is located in the main controller.

According to one of the embodiments of the present disclosure, in the step S1, the main controller further sends a black start signal via an auxiliary power control line to a start switch in the battery pack, and the start switch in the battery pack turns on power of the battery controller after receiving the black start signal, to complete start of the battery pack.

According to one of the embodiments of the present disclosure, the main controller assigns a virtual address to each battery pack via a communication bus, and the main controller maintains communication with the battery pack that has been assigned the virtual address, to obtain the number of the battery packs.

According to one of the embodiments of the present disclosure, the battery pack that has obtained the virtual address feeds back a current physical location via the communication bus, and a battery pack that has not yet been assigned a virtual address returns an invalid physical location for detecting a completion rate of physical location identification of the battery pack.

According to one of the embodiments of the present disclosure, the intermediate physical location identification signal is a square wave signal, and the battery pack determines the physical location based on a frequency or a duty cycle of the received intermediate physical location identification signal.

In particular, the present disclosure further provides photovoltaic power plant commissioning addressing method. A terminal sends a photovoltaic power plant commissioning instruction and performs commissioning configuration, and a physical location of a battery pack is searched and determined automatically while the commissioning instruction is sent, where a process of searching and determining the physical location of the battery pack is performed by using the method for identifying a physical location of a battery pack described above.

According to one of the embodiments of the present disclosure, after the physical location of the battery pack is searched and determined, the physical location of the battery pack is reported to a main controller via a CAN bus.

Compared with the prior art, the advantages and beneficial effects of the apparatus for identifying a physical location of a battery pack and method, and the photovoltaic power plant commissioning addressing method of the present disclosure are:
The apparatus for identifying a physical location of a battery pack and method simplify the physical architecture for physical location identification of the battery pack, and realize automatic address assignment through a dedicated address bus. Compared with the conventional battery pack address calibration method through a physical dip switch or manual labor, the present disclosure improves the processing efficiency and reliability, effectively improving the installation efficiency of the battery packs and even the photovoltaic power plant.

Further, a terminal matching resistor is disposed in each battery pack. After physical locations of all the battery packs have been identified, a terminal matching resistor of the battery pack at the tail end is turned on through the CAN bus, thus realizing automatic configuration of the matching resistors of the CAN bus and ensuring the communication reliability of the CAN bus. The last terminal matching resistor does not need to be installed manually, which improves the installation efficiency.

In addition, according to the photovoltaic power plant commissioning addressing method of this application, physical location identification of the battery pack is triggered during commissioning, to realize the automatic start and location identification of the battery packs and reduce the commissioning user operations. The physical location identification of the battery pack and commissioning parameter configuration of the photovoltaic power plant are executed simultaneously, which can effectively shorten the commissioning time and improve the user experience.

### BRIEF DESCRIPTION OF THE DRAWINGS

Some specific embodiments of the present disclosure will be described in detail below in an illustrative rather than restrictive manner with reference to the drawings. The same reference numerals in the drawings refer to like or similar components or parts. Those skilled in the art should understand that the drawings are not plotted to scale. In the accompanying drawings:
FIG. 1 is a circuit structure block diagram of an apparatus for identifying a physical location of a battery pack according to an embodiment of the present disclosure;

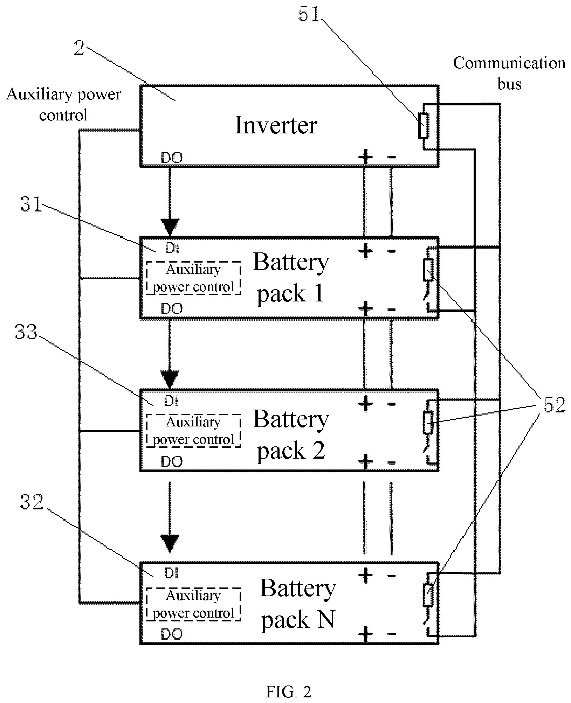

FIG. 2 is a circuit structure block diagram of an apparatus for identifying a physical location of a battery pack according to another embodiment of the present disclosure;
FIG. 3 is a schematic flowchart at a main controller of a method for identifying a physical location of a battery pack according to an embodiment of the present disclosure;
FIG. 4 is a schematic flowchart at an inverter of a method for identifying a physical location of a battery pack according to an embodiment of the present disclosure;
FIG. 5 is a schematic flowchart at a battery pack of a method for identifying a physical location of a battery pack according to an embodiment of the present disclosure; and
FIG. 6 is a schematic flowchart a photovoltaic power plant commissioning addressing method according to an embodiment of the present disclosure.

### Reference numerals:

1: main controller, 2: inverter, 31: first battery pack, 32: second battery pack, 33: third battery pack, 4: battery controller, 51: first terminal matching resistor, 52: second terminal matching resistor, 53: electrically controllable switch.

### DETAILED DESCRIPTION OF THE EMBODIMENTS

The following clearly and completely describes the technical solutions of the present disclosure with reference to accompanying drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

However, the aspects and embodiments in the present disclosure are not necessarily within the scope of protection of the present invention. Indeed,the invention is defined by the features of the independent claims. Preferred embodiments are defined in the dependent claims.

In addition, the technical features involved in the various embodiments of the present disclosure described below may be combined with each other as long as they do not constitute a conflict with each other.

### Embodiment 1

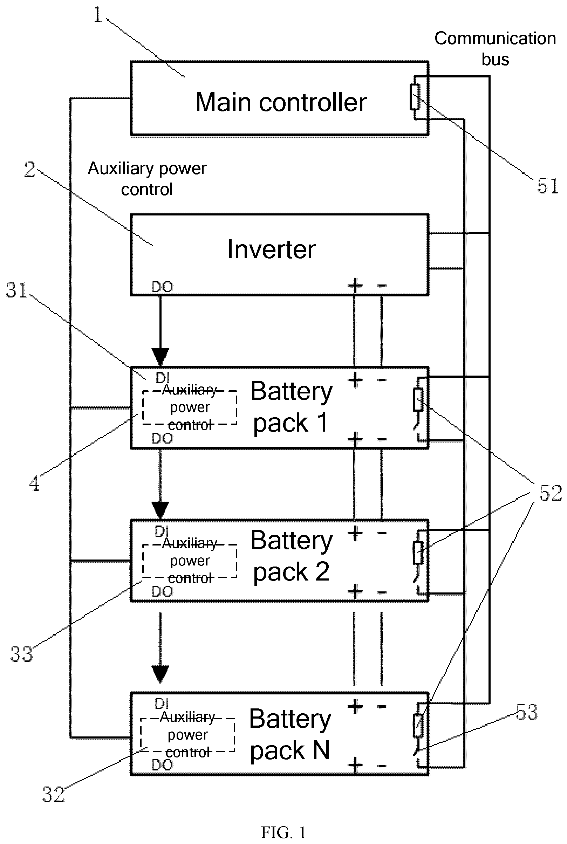

This embodiment provides an apparatus for identifying a physical location of a battery pack, used for a photovoltaic power plant including an energy storage device. As shown in FIG. 1, the energy storage device includes a plurality of battery packs, the photovoltaic power plant includes inverter 2, and the apparatus for identifying a physical location of a battery pack includes main controller 1. The battery packs are sequentially connected in parallel via a power line, each battery pack is internally provided with battery controller 4 for information processing of the battery pack, the battery controllers 4 are communicatively connected via a communication bus, and digital interfaces of the battery controllers 4 are sequentially connected via an address calibration line. The inverter 2 is electrically connected to one of the plurality of battery packs via the power line, the inverter 2 is provided with an inverter controller, and a digital interface of the inverter controller is connected via the address calibration line to a digital interface of the battery controller 4 in the battery pack connected to the inverter. The main controller 1 is communicatively connected to the inverter controller and the battery controllers 4 via the communication bus.

The main controller 1 may send a control instruction to the inverter 2 via a CAN bus, the inverter controller in the inverter 2 processes the instruction and then sends a physical location identification start instruction to the battery pack connected to the inverter controller, and then the battery packs determine their physical locations one by one.

In an alternative embodiment, positive and negative poles of the battery packs are sequentially connected in parallel via the power line, and the digital interfaces of the battery packs are sequentially connected via the address calibration line. The plurality of battery packs sequentially connected are orderly arranged in series, and the battery pack located at the end (head end) is connected to the digital interface of the inverter 2 via the address calibration line. It should be noted herein that the digital interfaces referred to are digital interfaces of controllers in the inverter and the battery packs. For ease of description, the digital interface may be described as of a particular unit. For example, "the digital interface of the inverter 2" above refers to the digital interface of the inverter controller of the inverter 2.

Specifically, the battery controller 4 disposed in each battery pack has a group of digital interfaces, that is, the digital interface of the battery controller 4, and each group of digital interfaces includes a digital input interface and a digital output interface.

For ease of description of the apparatus for identifying a physical location of a battery pack, battery pack 1 connected to the inverter 2 is referred to as first battery pack 31, battery pack N located at the tail end is referred to as second battery pack 32, and each of the battery packs (battery pack 2, battery pack 3, ..., and battery pack N-1) located between the first battery pack 31 and the second battery pack 32 is referred to as third battery pack 33. FIG. 1 schematically illustrates a specific embodiment of the present disclosure and does not limit the protection scope of the present disclosure in any way. N is a positive integer greater than or equal to 1. Details are as follows:
When connecting the inverter 2 to the digital interface of the first battery pack 31 at the head end, the digital output interface of the inverter 2 is connected to the digital input interface of the first battery pack 31 via the address calibration line;
when connecting the first battery pack 31 to the digital interface of one third battery pack 33, the digital output interface of the first battery pack 31 is connected to the digital input interface of the third battery pack 33 via the address calibration line;
when connecting the third battery pack 33 to the digital interface of the second battery pack 32 at the tail end, the digital output interface of the third battery pack 33 is connected to the digital input interface of the second battery pack 32 via the address calibration line; and
when connecting the digital interfaces of the third battery packs 33, the digital input interface of the third battery pack 33 is connected to the digital output interface of the previous battery pack via the address calibration line, and the digital output interface of the third battery pack 33 is connected to the digital input interface of the latter battery pack via the address calibration line.

There is a controller unit in each battery pack, that is, the aforementioned battery controller 4, and the digital interface is provided at the battery controller 4. In an alternative embodiment, for physical location identification processing, a separate controller may be provided in each battery pack instead of the battery controller 4 used for control processing in the battery pack. The applicant believes that either the battery controller 4 available in each battery pack or a separate controller for physical location identification processing should fall within the protection scope of this application.

The communication bus is an RS485 bus or a CAN bus, and either can be used in the embodiments of the present disclosure. For the communication reliability, it is usually necessary to dispose terminal matching resistors at the head end and the tail end of the communication bus.

The CAN bus is used as an example in this embodiment. In CAN communication, terminal matching resistors are also disposed at both ends of the CAN bus and referred to as bus terminals, that is, the terminal matching resistors. The terminal matching resistors are disposed to reduce signal reflection and interference, ensuring that the signal passes through the CAN bus correctly. Therefore, first terminal matching resistor 51 at the head end of the CAN bus is located at the main controller 1 and is turned on, and second terminal matching resistor 52 is kept on and disposed in the battery pack at the tail end. The conventional second terminal matching resistor 52 in the battery pack is disposed manually in the battery pack at the tail end and turned on after the physical locations are assigned, thereby achieving reliable setting of the CAN bus.

**In** an embodiment of this application, the second terminal matching resistor 52 and electrically controllable switch 53 are configured in each battery pack, and the terminal matching resistor 52 is connected in series with the electrically controllable switch 53 and then connected in parallel to the communication bus. After the physical location of the battery pack is identified, the location information is reported, and the battery pack (the second battery pack 32) at the tail end turns on the electrically controllable switch connected to the internal terminal matching resistor 52, and the second terminal matching resistor 52 of the last battery pack is connected to the tail end of the CAN bus, such that the terminal matching resistors of the CAN bus are automatically configured, realizing reliable signal transmission through the CAN bus.

In addition, the main controller 1 is connected to the start switch disposed in each battery pack via an auxiliary power control line, that is, the main controller 1 is connected to each start switch separately via the auxiliary power control line. The main controller 1 may send a control instruction, such as a black start signal, to each battery pack via the auxiliary power control line, to achieve black-start of the battery pack.

### Embodiment 2

The overall architecture of the apparatus for identifying a physical location of a battery pack of this embodiment is improved on the basis of Embodiment 1. The improvement is that the main controller is not needed, but the inverter controller in the inverter 2 is used to send control instructions and initial physical location identification instructions, thereby simplifying the overall architecture. To be specific, the inverter controller is communicatively connected to each battery controller 4 via the communication bus and the first terminal matching resistor 51 is located in the inverter 2. In addition, the inverter 2 is connected to the start switch disposed in each battery pack via the auxiliary power control line, that is, the inverter 2 is connected to each start switch separately via the auxiliary power control line. The inverter 2 may send a control instruction, such as a black start signal, to each battery pack through the auxiliary power control line, to achieve black-start of the battery pack.

### Embodiment 3

This embodiment provides a method for identifying a physical location of a battery pack based on the apparatus for identifying a physical location of a battery pack described in Embodiment 1 or Embodiment 2. The method includes the following steps:
Step S1: Main controller 1 sends a device search start instruction to inverter 2.
Step S2: The inverter 2 receives the device search start instruction and sends an initial physical location identification signal to first battery pack 31 connected to the inverter 2.
Step S3: The first battery pack 31 determines an initial location based on the initial physical location identification signal sent by the inverter 2 and sends an intermediate physical location identification signal to third battery pack 33 connected to the first battery pack 31.
Step S4: The third battery pack 33 determines its physical location based on the intermediate physical location identification signal, and continues to send the intermediate physical location identification signal to another battery pack connected to the third battery pack 33, to determine the physical locations of the battery packs sequentially until a battery pack at the tail end (that is, second battery pack 32), completing physical location identification of all the battery packs.

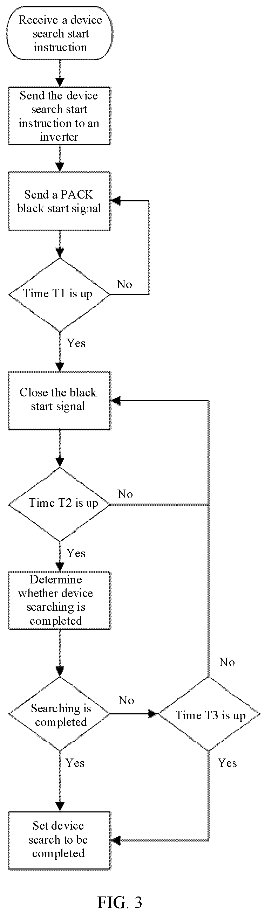

The following specifies the processing logic at the main controller 1, the inverter 2 and the battery pack in the process of the method for identifying a physical location of a battery pack:
At the main controller 1, as shown in FIG. 3, when the device search start instruction is received from the outside, the main controller 1 sends the device search start instruction to the inverter 2, and sends the black start signal to the battery pack via the auxiliary power control line. The start switch in the battery pack receives the black start signal and is turned on, such that power on of the battery pack is completed. Black start of the battery pack may be triggered by the instruction sent by the main controller 1, or may be manually controlled on site, which can be adjusted according to the specific situation. Physical identification of the battery pack is performed after the battery pack is powered on. The battery pack black start signal is sent and kept for time T1, and then is closed, to ensure that the black start signal is sent successfully, and ensure that each battery pack can be started successfully. However, T1 cannot be set too long, to prevent the long time hard start from making the battery pack unable to enter the hibernation state and leading to battery pack power loss. Whether the device searching is completed is determined after time T2 through feedback of physical locations of the battery packs, so as to detect the number of the battery packs and the completion rate of physical location identification. If it is determined that the searching is not completed, whether time T3 is reached is determined, and device searching ends if the time T3 is reached, that is, physical location identification of the battery packs ends; or if the time T3 is not reached, the step of determining whether the device searching is completed is performed again. T3 is the timeout setting and is the longest time to ensure that the physical location identification can be completed, thereby avoiding affecting the subsequent commissioning process because the physical location identification cannot end.

For the setting of T1, T2 and T3, timing of T1, T2 and T3 starts from a same time and the start time of timing is the time when the device search start instruction is received. Generally, T1<T2<T3. In this embodiment, T1 is set to 5 S, T2 is set to 30 S, and T3 is set to 60 S.

During the process in which the battery packs feed back the physical locations, the main controller assigns a virtual address to each battery pack via the communication bus, and the main controller maintains communication with the battery pack that has been assigned the virtual address, to obtain the number of battery packs. In this way, the number of battery packs can be determined. The battery pack that has obtained the virtual address feeds back its current physical location via the communication bus, and a battery pack that has not yet been assigned a virtual location returns an invalid physical location for detecting a completion rate of physical location identification of the battery pack.

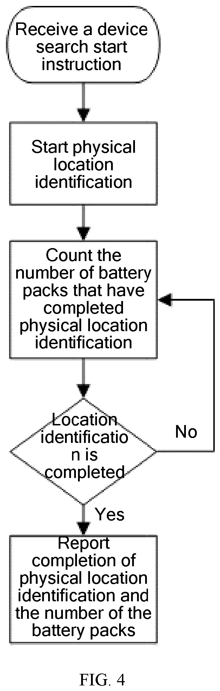

At the inverter 2, as shown in FIG. 4, after receiving the device search start instruction from the main controller 1, the inverter 2 sends an initial physical location identification signal to the first battery pack 31 connected to it to start physical location identification of the battery pack, and then each battery pack identifies its own physical location one by one. After each battery pack determines its own location, it continues to send the intermediate physical location identification signal and reports its physical location to the inverter 2. The inverter 2 counts the number of the battery packs that have completed the physical location identification. When the requirement of the photovoltaic power plant for the battery packs is satisfied, it indicates the end of physical location identification, and the inverter 2 reports completion of physical location identification to the main controller 1 via the CAN bus, and also reports the physical location of each battery pack and the number of the battery packs.

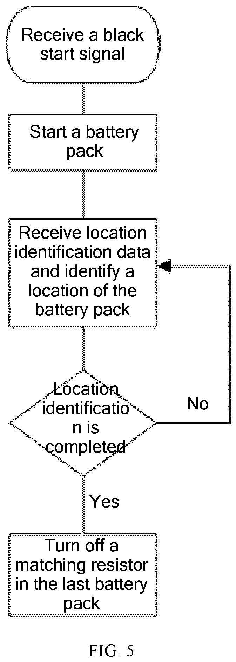

At the battery pack, as shown in FIG. 5, the battery pack receives the black start signal from the main controller 1 via the auxiliary power control line, automatically completes start-up and initialization of the battery pack, completes power on of the battery pack, then waits to receive the initial physical location identification signal from the inverter 2 connected to it or the intermediate physical location identification signal from the previous battery pack, identifies and determines its own physical location based on the received location identification data, and feeds back the location identification data to the inverter 2 during this process, to determine whether the location identification is completed. If no, the battery pack continues to send the intermediate physical location identification signal until the location identification ends and the physical location of the last battery pack, that is, the physical location of the second battery pack 32 is determined.

**In** an embodiment, the method for identifying a physical location of a battery pack further includes step S5: After physical locations of all the battery packs are identified, the main controller 1 sends a terminal resistor turn-on trigger signal via a CAN bus to a battery pack that last confirms the physical location, the battery pack that last confirms the physical location turns on an electrically controllable switch connected to the terminal matching resistor in the battery pack upon receiving the terminal resistor turn-on trigger signal, and the terminal matching resistor in the second battery pack 32 is connected to the CAN bus, such that the terminal matching resistors of the CAN bus are automatically configured, realizing reliable signal transmission through the CAN bus.

The intermediate physical location identification signal is a square wave signal, and the battery pack determines the physical location based on a duty cycle of the received intermediate physical location identification signal. In other words, the duty cycle of the signal changes in equal proportion each time the battery pack sends the intermediate physical location identification signal. For example, in the photovoltaic power plant with four battery packs: first battery pack 31, second battery pack 32, and two third battery packs 33 located between the first battery pack 31 and the second battery pack 32, a duty cycle of the intermediate physical location identification signal sent by the first battery pack 31 to the third battery pack 33 connected to it is 5%, a duty cycle of the intermediate physical location identification signal sent by the third battery pack 33 to the other third battery pack 33 connected to it is 15%, a duty cycle of the intermediate physical location identification signal sent by the other third battery pack 33 to the second battery pack 32 connected to it is 25%, and a duty cycle of the intermediate physical location identification signal output by the second battery pack 32 at the tail end is 35%. The second battery pack 32 feeds the intermediate physical location identification signal with the duty cycle of 35% back to the inverter 2, and it can be concluded that the second battery pack 32 is the tail-end battery pack, and the location identification of the battery pack ends.

The intermediate physical location identification signal is a square wave signal, and the battery pack determines its physical location based on the frequency of the received intermediate physical location identification signal. In other words, the frequency of the signal changes in equal proportion each time the battery pack sends the intermediate physical location identification signal. For example, in the photovoltaic power plant with four battery packs: first battery pack 31, second battery pack 32, and two third battery packs 33 located between the first battery pack 31 and the second battery pack 32, a frequency of the intermediate physical location identification signal sent by the first battery pack 31 to the third battery pack 33 connected to it is 6 Hz, a frequency of the intermediate physical location identification signal sent by the third battery pack 33 to the other third battery pack 33 connected to it is 8 Hz, a frequency of the intermediate physical location identification signal sent by the other third battery pack 33 to the second battery pack 32 connected to it is 10 Hz, and a frequency of the intermediate physical location identification signal output by the second battery pack 32 at the tail end is 12 Hz. The second battery pack 32 feeds the intermediate physical location identification signal with the frequency of 12 Hz back to the inverter 2, and it can be concluded that the second battery pack 32 is the tail-end battery pack, and the location identification of the battery pack ends.

The apparatus for identifying a physical location of a battery pack and method in this embodiment simplify the physical architecture for physical location identification of the battery pack, and realize automatic address assignment through a dedicated address bus. Compared with the conventional battery pack address calibration method through a physical dip switch or manual labor, the present disclosure improves the processing efficiency and reliability, effectively improving the installation efficiency of the battery packs and even the photovoltaic power plant.

### Embodiment 4

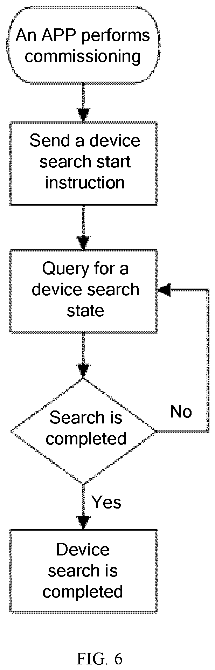

This embodiment provides a photovoltaic power plant commissioning addressing method to optimize and improve the foregoing embodiments. As shown in FIG. 6, improvement includes shortening the commissioning time of the photovoltaic power plant. The APP terminal sends a photovoltaic power plant commissioning instruction and performs commissioning configuration. While sending the photovoltaic power plant commissioning instruction, the APP terminal automatically sends a device search start instruction to main controller 1, and the main controller 1 monitors the device searching until the device searching is completed. When the user sets basic parameters for photovoltaic power plant commissioning through the APP terminal, the physical location of the battery pack is searched and determined automatically, and the process of searching and determining the physical location of the battery pack is performed by using the method for identifying a physical location of a battery pack described in Embodiment 3.

According to the photovoltaic power plant commissioning addressing method of this embodiment, physical location identification of the battery pack is triggered during commissioning, to realize automatic start and location identification of the battery packs and reduce the commissioning user operations. The physical location identification of the battery pack and commissioning parameter configuration of the photovoltaic power plant are executed simultaneously, which can effectively shorten the commissioning time and improve the user experience.

In an embodiment, after the physical location of the battery pack is searched and determined, the physical location of the battery pack is reported to the main controller 1 via a CAN bus, and then fed back to the cloud or sent directly to the APP terminal by the main controller 1.

## Claims

1. A photovoltaic power plant comprising an energy storage device, an inverter (2) and an apparatus for identifying a physical location of a battery pack, wherein the energy storage device comprises a plurality of battery packs (31, 32, 33), and the apparatus for identifying the physical location of the battery pack (31, 32, 33) comprises a main controller (1); and
the plurality of battery packs (31, 32, 33) are electrically connected to the inverter (2) via a power line, and the plurality of battery packs (31, 32, 33) are connected to the inverter (2) via an address calibration line, the address calibration line is used to transmit a physical location identification signal, and the main controller (1) is communicatively connected to the inverter (2) and the plurality of battery packs (31, 32, 33) via a communication bus;
**characterized in that**
each of the plurality of battery packs (31, 32, 33) is internally provided with a terminal matching resistor (51, 52) and an electrically controllable switch (53), and the terminal matching resistors (51, 52) are connected in series with the electrically controllable switch (53) and then connected in parallel to the communication bus; wherein after physical locations of all the plurality of battery packs (31, 32, 33) are identified, the main controller (1) is configured to send a terminal resistor turn-on trigger signal via the communication bus to the battery pack that last confirms the physical location, to turn on an electrically controllable switch (53) in the battery pack that last confirms the physical location after receiving the terminal resistor turn-on trigger signal, and to connect the communication bus to a terminal matching resistor (51, 52) of the battery pack that last confirms the physical location at a tail end.

2. The photovoltaic power plant according to claim 1, **characterized in that** the plurality of battery packs (31, 32, 33) are sequentially connected in parallel via the power line, and address configuration interfaces of the plurality of battery packs (31, 32, 33) are sequentially connected via the address calibration line.

3. The photovoltaic power plant according to claim 2, **characterized in that** the plurality of battery packs (31, 32, 33) are sequentially connected in parallel via the power line, a battery controller (4) is provided in each of the plurality of battery packs (31, 32, 33), and digital interfaces of the battery controllers (4) are sequentially connected via the address calibration line.

4. The photovoltaic power plant according to claim 3, **characterized in that** the inverter (2) is electrically connected to at least one of the plurality of battery packs (31, 32, 33) via the power line, the inverter (2) comprises an inverter controller, and a digital interface of the inverter controller is connected to a digital interface of the plurality of battery packs (31, 32, 33) connected to the inverter (2) via the address calibration line.

5. The photovoltaic power plant according to claim 4, **characterized in that** the main controller (1) is communicatively connected to the inverter controller and the battery controllers (4) via the communication bus.

6. The photovoltaic power plant according to claim 5, **characterized in that** the battery controller (4) has at least one group of digital interfaces, and digital interfaces of every two adjacent battery controllers (4) are connected via the address calibration line, to sequentially connect the plurality of battery packs (31, 32, 33).

7. The photovoltaic power plant according to claim 6, **characterized in that** among the plurality of battery packs (31, 32, 33) sequentially connected, a digital input interface of the battery controller (4) of one of the plurality of battery pack (31) located at an end is connected to a digital output interface of the inverter (2) via the address calibration line.

8. The photovoltaic power plant according to claim 6 or 7, **characterized in that** each group of digital interfaces comprises a digital input interface and a digital output interface, among the plurality of battery packs (31, 32, 33) sequentially connected, a digital input interface of one of the plurality of battery packs (32) is connected to a digital output interface of a previous one of the plurality of battery packs (31) via the address calibration line, and a digital output interface of one of the plurality of battery packs (32) is connected to a digital input interface of a latter one of the plurality of battery packs (33) via the address calibration line.

9. The photovoltaic power plant according to claim 1, **characterized in that** each of the plurality of the battery packs (31, 32, 33) is provided with an electrically controllable start switch, and the main controller (1) is connected to each start switch separately through an auxiliary power control line, to start the plurality of battery packs (31, 32, 33); or
the main controller (1) is an inverter controller of the inverter (2), and the inverter controller is communicatively connected to each of the battery controllers (4) via the communication bus.

10. A method for identifying a physical location of a battery pack based on the photovoltaic power plant according to any one of claims 1 to 9, comprising the following steps:
step S1: sending, by a main controller (1), a device search start instruction to an inverter (2);
step S2: sending, by the inverter (2) after receiving the device search start instruction, an initial physical location identification signal to an n^{th} battery pack (31) connected to the inverter (2);
step S3: determining, by the n^{th} battery pack (31), an initial location based on the initial physical location identification signal sent by the inverter (2), and sending an intermediate physical location identification signal to an (n+1)^{th} battery pack (32) connected to the n^{th} battery pack (31); and
step S4: determining, by the (n+1)^{th} battery pack (32) connected to the n^{th} battery pack (31), a physical location of the (n+1)^{th} battery pack (32) based on the intermediate physical location identification signal, and continuing to send the intermediate physical location identification signal to an (n+2)^{th} battery pack (33) connected to the (n+1)^{th} battery pack (32), to determine a physical location of the (n+2)^{th} battery pack (33), wherein n is an integer greater than or equal to 1;
**characterized in that** the method further comprises step S5:
after physical locations of all the plurality of battery packs (31, 32, 33) are identified, sending, by the main controller (1), a terminal resistor turn-on trigger signal via the communication bus to the battery pack that last confirms the physical location, turning on an electrically controllable switch (53) in the battery pack that last confirms the physical location after receiving the terminal resistor turn-on trigger signal, and connecting the communication bus to a terminal matching resistor (51, 52) of the battery pack that last confirms the physical location at a tail end.

11. The method for identifying a physical location of a battery pack according to claim 10, **characterized in that** a terminal matching resistor (51, 52) at a head end of the communication bus is located in the main controller (1); or
wherein, in the step S1, the main controller (1) further sends a black start signal via an auxiliary power control line to a start switch in the battery pack, and the start switch in the plurality of battery pack (31, 32, 33) turns on a power supply of the battery controller (4) after receiving the black start signal, to complete start of the plurality of battery pack (31, 32, 33); or
wherein the intermediate physical location identification signal is a square wave signal, and the plurality of battery packs (31, 32, 33) determines the physical location based on a frequency or a duty cycle of the received intermediate physical location identification signal.

12. The method for identifying a physical location of a battery pack according to claim 10, **characterized in that** the main controller (1) assigns a virtual address to each of the battery packs (31, 32, 33) via a communication bus, and the main controller (1) maintains communication with the plurality of battery packs (31, 32, 33) to which the virtual address has been assigned, to obtain the number of the plurality of battery packs (31, 32, 33).

13. The method for identifying a physical location of a battery pack according to claim 12, **characterized in that** the battery pack that has obtained the virtual address feeds back a current physical location via the communication bus, and one of the plurality of battery packs that has not yet been assigned a virtual address returns an invalid physical location for detecting a completion rate of physical location identification of the battery pack.

14. A photovoltaic power plant commissioning addressing method, wherein a terminal sends a photovoltaic power plant commissioning instruction and performs commissioning configuration, **characterized in that** a physical location of a battery pack is searched and determined automatically while the commissioning instruction is sent, wherein a process of searching and determining the physical location of the battery pack is performed by using the method for identifying a physical location of a battery pack according to any one of claims 10 to 13.

15. The photovoltaic power plant commissioning addressing method according to claim 14, **characterized in that** after the physical location of the battery pack is searched and determined, the physical location of the battery pack is reported to a main controller via a controller area network (CAN) bus.

## Patentansprüche

1. Fotovoltaikkraftwerkwerk, das eine Energiespeichervorrichtung, einen Wechselrichter (2) und eine Einrichtung zum Identifizieren eines physischen Orts eines Akkupacks umfasst, wobei die Energiespeichervorrichtung eine Vielzahl von Akkupacks (31, 32, 33) umfasst, und die Einrichtung zum Identifizieren des physischen Orts des Akkupacks (31, 32, 33) eine Hauptsteuervorrichtung (1) umfasst; und
die Vielzahl von Akkupacks (31, 32, 33) elektrisch über eine Stromleitung mit dem Wechselrichter (2) verbunden ist, und die Vielzahl von Akkupacks (31, 32, 33) über eine Adresskalibrierungsleitung mit dem Wechselrichter (2) verbunden ist, die Adresskalibrierungsleitung zum Übertragen eines Identifizierungssignals eines physischen Orts verwendet wird, und die Hauptsteuervorrichtung (1) kommunikativ mit dem Wechselrichter (2) und der Vielzahl von Akkupacks (31, 32, 33) über einen Kommunikationsbus verbunden ist;
**dadurch gekennzeichnet, dass**
jeder der Vielzahl von Akkupacks (31, 32, 33) intern mit einem Anpassungsendwiderstand (51, 52) und einem elektrisch steuerbaren Schalter (53) versehen ist, und die Anpassungsendwiderstände (51, 52) in Reihe mit dem elektrisch steuerbaren Schalter (53) und dann zu dem Kommunikationsbus parallel geschaltet sind; wobei nach dem Identifizieren aller physischen Orte aller der Vielzahl der Akkupacks (31, 32, 33) die Hauptsteuervorrichtung (1) dazu konfiguriert ist, ein Endwiderstands-Einschalttriggersignal über den Kommunikationsbus an den Akkupack zu senden, der den physischen Ort zuletzt bestätigt, um einen elektrisch steuerbaren Schalter (53) in dem Akkupack, der den physischen Ort nach Empfangen des Auslösesignals des Endwiderstands bestätigt, einzuschalten und den Kommunikationsbus mit einem Anpassungsendwiderstand (51, 52) des Akkupacks, der den physischen Ort an dem hinteren Ende bestätigt, zu verbinden.

2. Fotovoltaikkraftwerkwerk nach Anspruch 1, **dadurch gekennzeichnet, dass** die Vielzahl von Akkupacks (31, 32, 33) sequenziell über die Stromleitung parallel geschaltet ist, und Adresskonfigurationsschnittstellen der Vielzahl von Akkupacks (31, 32, 33) sequenziell über die Adresskalibrierungsleitung verbunden sind.

3. Fotovoltaikkraftwerkwerk nach Anspruch 2, **dadurch gekennzeichnet, dass** die Vielzahl von Akkupacks (31, 32, 33) sequenziell über die Stromleitung parallel geschaltet ist, eine Akkusteuervorrichtung (4) in der Vielzahl von Akkupacks (31, 32, 33) bereitgestellt ist, und digitale Schnittstellen der Akkusteuervorrichtungen (4) sequenziell über die Adresskalibrierungsleitung verbunden sind.

4. Fotovoltaikkraftwerkwerk nach Anspruch 3, **dadurch gekennzeichnet, dass** der Wechselrichter (2) elektrisch mit mindestens einem einer Vielzahl von Akkupacks (31, 32, 33) über die Stromleitung verbunden ist, der Wechselrichter (2) eine Wechselrichtersteuervorrichtung umfasst, und eine digitale Schnittstelle der Wechselrichtersteuervorrichtung mit einer digitalen Schnittstelle der Vielzahl von Akkupacks (31, 32, 33) über die Adresskalibrierungsleitung mit dem Wechselrichter (2) verbunden ist.

5. Fotovoltaikkraftwerkwerk nach Anspruch 4, **dadurch gekennzeichnet, dass** die Hauptsteuervorrichtung (1) kommunikativ mit der Wechselrichtersteuervorrichtung und den Akkusteuervorrichtungen (4) über den Kommunikationsbus verbunden ist.

6. Fotovoltaikkraftwerkwerk nach Anspruch 5, **dadurch gekennzeichnet, dass** die Akkusteuervorrichtung (4) mindestens eine Gruppe digitaler Schnittstellen aufweist, und die digitalen Schnittstellen von jeweils zwei angrenzenden Akkusteuervorrichtungen (4) über die Adresskalibrierungsleitung verbunden sind, um die Vielzahl von Akkupacks (31, 32, 33) sequenziell zu verbinden.

7. Fotovoltaikkraftwerkwerk nach Anspruch 6, **dadurch gekennzeichnet, dass** unter der Vielzahl von Akkupacks (31, 32, 33), die sequenziell verbunden sind, eine digitale Eingangsschnittstelle der Akkusteuervorrichtung (4) eines der Vielzahl von Akkupacks (31), der an einem Ende liegt, über die Adresskalibrierungsleitung mit einer digitalen Ausgangsschnittstelle des Wechselrichters (2) verbunden ist.

8. Fotovoltaikkraftwerkwerk nach Anspruch 6 oder 7, **dadurch gekennzeichnet, dass** jede Gruppe digitaler Schnittstellen eine digitale Eingangsschnittstelle und eine digitale Ausgangsschnittstelle umfasst, unter der Vielzahl von Akkupacks (31, 32, 33), die sequenziell verbunden sind, eine digitale Eingangsschnittstelle eines der Vielzahl von Akkupacks (32) über die Adresskalibrierungsleitung mit einer digitalen Ausgangsschnittstelle eines vorherigen der Vielzahl von Akkupacks (31) verbunden ist, und eine digitale Ausgangsschnittstelle eines der Vielzahl von Akkupacks (32) über die Adresskalibrierungsleitung mit einer digitalen Eingangsschnittstelle eines Letzteren der Vielzahl von Akkupacks (33) verbunden ist.

9. Fotovoltaikkraftwerkwerk nach Anspruch 1, **dadurch gekennzeichnet, dass** jeder der Vielzahl von Akkupacks (31, 32, 33) mit einem elektrisch steuerbaren Startschalter versehen ist, und die Hauptsteuervorrichtung (1) mit jedem Startschalter separat über eine Hilfsstromsteuerleitung verbunden ist, um die Vielzahl von Akkupacks (31, 32, 33) zu starten; oder
die Hauptsteuervorrichtung (1) eine Wechselrichtersteuervorrichtung des Wechselrichters (2) ist, und die Wechselrichtersteuervorrichtung kommunikativ mit jeder der Akkusteuervorrichtungen (4) über den Kommunikationsbus verbunden ist.

10. Verfahren zum Identifizieren eines physischen Orts eines Akkupacks basierend auf dem Fotovoltaikkraftwerkwerk nach einem der Ansprüche 1 bis 9, das die folgenden Schritte umfasst:
Schritt S1: Senden durch eine Hauptsteuervorrichtung (1) einer Vorrichtungssuche-Startanweisung an einen Wechselrichter (2);
Schritt S2: Senden durch den Wechselrichter (2) nach Empfangen der Vorrichtungssuche-Startanweisung eines anfänglichen physischen Ortsidentifizierungssignals an einen n-ten Akkupack (31), der mit dem Wechselrichter (2) verbunden ist;
Schritt S3: Bestimmen durch den n-ten Akkupack (31) eines anfänglichen Orts basierend auf dem von dem Wechselrichter (2) gesendeten Anfangssignals zur Identifizierung des physischen Orts, und Senden eines Zwischensignals zur Identifizierung des physischen Orts an einen (n+1)-ten Akkupack (32), der mit dem n-ten Akkupack (31) verbunden ist; und
Schritt S4: Bestimmen durch den (n+1)-ten Akkupack (32), der mit dem n-ten Akkupack (31) verbunden ist, eines physischen Ort des (n+1)-ten Akkupacks (32) basierend auf dem Zwischensignal zur Identifizierung des physischen Orts, und Fortsetzen des Sendens des Zwischensignals zur Identifizierung des physischen Orts an einen (n+2)-ten Akkupack (33), der mit dem (n+1)-ten Akkupack (32) verbunden ist, um einen physischen Ort des (n+2)-ten Akkupacks (33) zu bestimmen, wobei n eine Ganzzahl größer oder gleich 1 ist;
**dadurch gekennzeichnet, dass** das Verfahren weiter Schritt S5 umfasst:
nachdem physische Orte aller der Vielzahl von Akkupacks (31, 32, 33) identifiziert sind, Senden, durch den Hauptsteuervorrichtung (1), eines Endwiderstand-Einschalttriggersignals über den Kommunikationsbus an den Akkupack, der zuletzt den physischen Ort bestätigt, Einschalten eines elektrisch steuerbaren Schalters (53) in dem Akkupack, der den physischen Ort nach Empfangen des Auslösesignals des Endwiderstands zuletzt bestätigt, und Verbinden des Kommunikationsbusses mit einem Anpassungsendwiderstand (51, 52) des Akkupacks, der die physische Lage an dem hinteren Ende zuletzt bestätigt.

11. Verfahren zum Identifizieren eines physischen Orts eines Akkupacks nach Anspruch 10, **dadurch gekennzeichnet, dass** sich ein Anpassungsendwiderstand (51, 52) an einem Kopfende des Kommunikationsbusses in der Hauptsteuervorrichtung (1) befindet; oder
wobei, im Schritt S1, die Hauptsteuervorrichtung (1) weiter ein Schwarzstartsignal über eine Hilfsstromsteuerleitung an einen Startschalter in dem Akkupack sendet, und der Startschalter in der Vielzahl von Akkupacks (31, 32, 33) eine Stromversorgung der Akkusteuervorrichtung (4) einschaltet, nachdem das Schwarzstartsignal empfangen wurde, um den Start der Vielzahl von Akkupacks (31, 32, 33) abzuschließen; oder
wobei das physische Zwischensignal zur Identifizierung des Orts ein Rechteckwellensignal ist und die Vielzahl von Akkupacks (31, 32, 33) den physischen Ort basierend auf einer Frequenz oder einem Arbeitszyklus des empfangenen physischen zwischen Signal zur Identifizierung des Orts bestimmt.

12. Verfahren zum Identifizieren eines physischen Orts eines Akkupacks nach Anspruch 10, **dadurch gekennzeichnet, dass** die Hauptsteuervorrichtung (1) jedem der Akkupacks (31, 32, 33) eine virtuelle Adresse über einen Kommunikationsbus zuweist, und die Hauptsteuervorrichtung (1) die Kommunikation mit der Vielzahl von Akkupacks (31, 32, 33), der die virtuelle Adresse zugewiesen wurde, aufrechterhält, um die Anzahl der Vielzahl von Akkupacks (31, 32, 33) zu erhalten.

13. Verfahren zum Identifizieren eines physischen Orts eines Akkupacks nach Anspruch 12, **dadurch gekennzeichnet, dass** der Akkupack, der die virtuelle Adresse erhalten hat, einen aktuellen physischen Ort über den Kommunikationsbus zurückgibt, und einer der Vielzahl von Akkupacks, denen noch keine virtuelle Adresse zugewiesen wurde, einen ungültigen physischen Ort zurückgibt, um eine Abschlussrate der Identifizierung des physischen Orts des Akkupacks zu erfassen.

14. Fotovoltaikkraftwerkwerk-Inbetriebnahme-Adressierungsverfahren, wobei ein Endgerät eine Anweisung zur Fotovoltaikkraftwerkwerk-Inbetriebnahme sendet und die Inbetriebnahmekonfiguration durchführt, **dadurch gekennzeichnet, dass** ein physischer Ort eines Akkupacks automatisch gesucht und bestimmt wird, während die Inbetriebnahmeanweisung gesendet wird, wobei ein Prozess des Suchens und Bestimmens des physischen Orts des Akkupacks unter Verwendung des Verfahrens zum Identifizieren eines physischen Orts eines Akkupacks nach einem der Ansprüche 10 bis 13 durchgeführt wird.

15. Fotovoltaikkraftwerkwerk-Inbetriebnahme-Adressierungsverfahren nach Anspruch 14, **dadurch gekennzeichnet, dass**, nachdem der physische Ort des Akkupacks gesucht und bestimmt wurde, der physische Ort des Akkupacks über einen Controller-Area-Netzwerkbus (CAN-Bus) an eine Hauptsteuervorrichtung gemeldet wird.

## Revendications

1. Centrale photovoltaïque comprenant un dispositif de stockage d'énergie, un onduleur (2) et un appareil d'identification d'un emplacement physique d'un bloc-batterie, dans lequel le dispositif de stockage d'énergie comprend une pluralité de blocs-batteries (31, 32, 33), et l'appareil d'identification de l'emplacement physique du bloc-batterie (31, 32, 33) comprend un contrôleur principal (1) ; et
la pluralité de blocs-batteries (31, 32, 33) sont connectés électriquement à l'onduleur (2) via une ligne d'alimentation, et la pluralité de blocs-batteries (31, 32, 33) sont connectés à l'onduleur (2) via une ligne d'étalonnage d'adresse, la ligne d'étalonnage d'adresse est utilisée pour transmettre un signal d'identification d'emplacement physique, et le contrôleur principal (1) est connecté en communication à l'onduleur (2) et à la pluralité de blocs-batteries (31, 32, 33) via un bus de communication ;
**caractérisée en ce que**
chacun parmi la pluralité de blocs-batteries (31, 32, 33) est pourvu en interne d'une résistance d'adaptation de terminaison (51, 52) et d'un commutateur commandé électriquement (53), et les résistances d'adaptation de terminaison (51, 52) sont connectées en série avec le commutateur commandé électriquement (53) et puis connectées en parallèle au bus de communication ; dans laquelle, après que les emplacements physiques de toute la pluralité de blocs-batteries (31, 32, 33) sont identifiés, le contrôleur principal (1) est configuré pour envoyer un signal de déclenchement de mise sous tension de résistance de terminaison via le bus de communication vers le bloc-batterie qui confirme en dernier l'emplacement physique, pour mettre sous tension un commutateur commandé électriquement (53) dans le bloc-batterie qui confirme en dernier l'emplacement physique après réception du signal de déclenchement de mise sous tension de résistance de terminaison, et pour connecter le bus de communication à une résistance d'adaptation de terminaison (51, 52) du bloc-batterie qui confirme en dernier l'emplacement physique au niveau d'une extrémité de queue.

2. Centrale photovoltaïque selon la revendication 1, **caractérisée en ce que** la pluralité de blocs-batteries (31, 32, 33) sont connectés en parallèle de manière séquentielle via la ligne d'alimentation, et des interfaces de configuration d'adresse de la pluralité de blocs-batteries (31, 32, 33) sont connectées de manière séquentielle via la ligne d'étalonnage d'adresse.

3. Centrale photovoltaïque selon la revendication 2, **caractérisée en ce que** la pluralité de blocs-batteries (31, 32, 33) sont connectés en parallèle de manière séquentielle via la ligne d'alimentation, un contrôleur de batterie (4) est disposé dans chacun parmi la pluralité de blocs-batteries (31, 32, 33), et des interfaces numériques des contrôleurs de batterie (4) sont connectées de manière séquentielle via la ligne d'étalonnage d'adresse.

4. Centrale photovoltaïque selon la revendication 3, **caractérisée en ce que** l'onduleur (2) est connecté électriquement à au moins un parmi la pluralité de blocs-batteries (31, 32, 33) via la ligne d'alimentation, l'onduleur (2) comprend un contrôleur d'onduleur, et une interface numérique du contrôleur d'onduleur est connectée à une interface numérique de la pluralité de blocs-batteries (31, 32, 33) connectée à l'onduleur (2) via la ligne d'étalonnage d'adresse.

5. Centrale photovoltaïque selon la revendication 4, **caractérisée en ce que** le contrôleur principal (1) est connecté en communication au contrôleur d'onduleur et aux contrôleurs de batterie (4) via le bus de communication.

6. Centrale photovoltaïque selon la revendication 5, **caractérisée en ce que** le contrôleur de batterie (4) présente au moins un groupe d'interfaces numériques, et des interfaces numériques de chaque paire de contrôleurs de batterie (4) adjacents sont connectées via la ligne d'étalonnage d'adresse, pour connecter de manière séquentielle la pluralité de blocs-batteries (31, 32, 33).

7. Centrale photovoltaïque selon la revendication 6, **caractérisée en ce que** parmi la pluralité de blocs-batteries (31, 32, 33) connectés de manière séquentielle, une interface d'entrée numérique d'un contrôleur de batterie (4) d'un parmi la pluralité de blocs-batteries (31) situé à une extrémité est connectée à une interface de sortie numérique de l'onduleur (2) via la ligne d'étalonnage d'adresse.

8. Centrale photovoltaïque selon la revendication 6 ou 7, **caractérisée en ce que** chaque groupe d'interfaces numériques comprend une interface d'entrée numérique et une interface de sortie numérique, parmi la pluralité de blocs-batteries (31, 32, 33) connectés de manière séquentielle, une interface d'entrée numérique d'un parmi la pluralité de blocs-batteries (32) est connectée à une interface de sortie numérique d'un bloc-batterie précédent parmi la pluralité de blocs-batteries (31) via la ligne d'étalonnage d'adresse, et une interface de sortie numérique d'un parmi la pluralité de blocs-batteries (32) est connectée à une interface d'entrée numérique d'un dernier bloc-batterie parmi la pluralité de blocs-batteries (33) via la ligne d'étalonnage d'adresse.

9. Centrale photovoltaïque selon la revendication 1, **caractérisée en ce que** chacun parmi la pluralité de blocs-batteries (31, 32, 33) est pourvu d'un commutateur de démarrage commandé électriquement, et le contrôleur principal (1) est connecté à chaque commutateur de démarrage séparément à travers une ligne de commande de puissance auxiliaire, pour démarrer la pluralité de blocs-batteries (31, 32, 33) ; ou
le contrôleur principal (1) est un contrôleur d'onduleur de l'onduleur (2), et le contrôleur d'onduleur est connecté en communication à chacun des contrôleurs de batterie (4) via le bus de communication.

10. Procédé d'identification d'un emplacement physique d'un bloc-batterie basé sur la centrale photovoltaïque selon l'une quelconque des revendications 1 à 9, comprenant les étapes suivantes :
étape S1 : l'envoi, par un contrôleur principal (1), d'une instruction de démarrage de recherche de dispositif vers un onduleur (2) ;
étape S2 : l'envoi, par l'onduleur (2), après la réception de l'instruction de démarrage de recherche de dispositif, d'un signal d'identification d'emplacement physique initial vers un n^{ème} bloc-batterie (31) connecté à l'onduleur (2) ;
étape S3 : la détermination, par le n^{ème} bloc-batterie (31), d'un emplacement initial sur la base du signal d'identification d'emplacement physique initial envoyé par l'onduleur (2), et l'envoi d'un signal d'identification d'emplacement physique intermédiaire vers un (n+1)^{ème} bloc-batterie (32) connecté au n^{ème} bloc-batterie (31) ; et
étape S4: la détermination, par le (n+1)^{ème} bloc-batterie (32) connecté au n^{èrne} bloc-batterie (31), d'un emplacement physique du (n+1)^{ème} bloc-batterie (32) sur la base du signal d'identification d'emplacement physique intermédiaire, et la poursuite de l'envoi du signal d'identification d'emplacement physique intermédiaire vers un (n+2)^{ème} bloc-batterie (33) connecté au (n+1)^{ème} bloc-batterie (32), pour déterminer un emplacement physique du (n+2)^{ème} bloc-batterie (33), dans lequel n est un nombre entier supérieur ou égal à 1 ;
**caractérisé en ce que** le procédé comprend en outre une étape S5 :
après que les emplacements physiques de toute la pluralité de blocs-batteries (31, 32, 33) sont identifiés, l'envoi, par le contrôleur principal (1), d'un signal de déclenchement de mise sous tension de résistance de terminaison via un bus de communication vers un bloc-batterie qui confirme en dernier l'emplacement physique, la mise sous tension d'un commutateur commandé électriquement (53) dans le bloc-batterie qui confirme en dernier l'emplacement physique après réception du signal de déclenchement de mise sous tension de résistance de terminaison, et la connexion du bus de communication à une résistance d'adaptation de terminaison (51, 52) du bloc-batterie qui confirme en dernier l'emplacement physique au niveau d'une extrémité de queue.

11. Procédé d'identification d'un emplacement physique d'un bloc-batterie selon la revendication 10, **caractérisé en ce qu'**une résistance d'adaptation de terminaison (51, 52) au niveau d'une extrémité de tête du bus de communication est située dans le contrôleur principal (1) ; ou
dans lequel, à l'étape S1, le contrôleur principal (1) envoie en outre un signal de démarrage à froid via une ligne de commande de puissance auxiliaire vers un commutateur de démarrage dans le bloc-batterie, et le commutateur de démarrage dans la pluralité de blocs-batteries (31, 32, 33) met sous tension une alimentation électrique du contrôleur de batterie (4) après réception du signal de démarrage à froid, pour achever le démarrage de la pluralité de blocs-batteries (31, 32, 33) ; ou
dans lequel le signal d'identification d'emplacement physique intermédiaire est un signal d'onde carrée, et la pluralité de blocs-batteries (31, 32, 33) détermine l'emplacement physique sur la base d'une fréquence ou d'un rapport cyclique du signal d'identification d'emplacement physique intermédiaire reçu.

12. Procédé d'identification d'un emplacement physique d'un bloc-batterie selon la revendication 10, **caractérisé en ce que** le contrôleur principal (1) attribue une adresse virtuelle à chacun des blocs-batteries (31, 32, 33) via un bus de communication, et le contrôleur principal (1) maintient la communication avec la pluralité de blocs-batteries (31, 32, 33) auquel l'adresse virtuelle a été attribuée, pour obtenir le nombre de la pluralité de blocs-batteries (31, 32, 33).

13. Procédé d'identification d'un emplacement physique d'un bloc-batterie selon la revendication 12, **caractérisé en ce que** le bloc-batterie qui a obtenu l'adresse virtuelle renvoie un emplacement physique actuel via le bus de communication, et un parmi la pluralité de bloc-batteries à qui un emplacement physique n'a pas encore été attribué renvoie un emplacement physique invalide pour détecter un taux d'achèvement d'identification d'emplacement physique du bloc-batterie.

14. Procédé d'adressage de mise en service de centrale photovoltaïque, dans lequel un terminal envoie une instruction de mise en service de centrale photovoltaïque et effectue une configuration de mise en service, **caractérisé en ce qu'**un emplacement physique d'un bloc-batterie est recherché et déterminé automatiquement alors que l'instruction de mise en service est envoyée, dans lequel un processus de recherche et de détermination de l'emplacement physique du bloc-batterie est effectué en utilisant le procédé pour identifier un emplacement physique d'un bloc-batterie selon l'une quelconque des revendications 10 à 13.

15. Procédé d'adressage de mise en service de centrale photovoltaïque selon la revendication 14, **caractérisé en ce qu'**après que l'emplacement physique du bloc-batterie a été recherché et déterminé, l'emplacement physique du bloc-batterie est rapporté à un contrôleur principal via un bus de réseau local de commande (CAN).
